# EUROPÄISCHE PATENTSCHRIFT

(11) **EP 1 887 308 B1**
(45) Veröffentlichungstag und Bekanntmachung des Hinweises auf die Patenterteilung: **18.01.2017**
(21) Anmeldenummer: 07014581.8
(22) Anmeldetag: 25.07.2007
(51) Int. Cl.: G01B 3/48, G01B 5/20

(54) **Vorrichtung und Verfahren zur Gewindeprüfung**
Device and method for checking a thread
Procédé et dispositif destinés au contrôle de filets

(30) Priorität: 27.07.2006 DE 102006034823
(43) Veröffentlichungstag der Anmeldung: 13.02.2008
(73) Patentinhaber: ARTIS GmbH, 21272 Egestorf (DE)
(72) Erfinder: Lange, Dirk, 21335 Lüneburg (DE); Mohr, Ulrich, 34132 Kassel (DE)
(74) Vertreter: Hess, Peter K. G.

(56) Entgegenhaltungen:
- DE-A1- 3 534 115
- DE-C- 906 398
- US-A- 2 513 460
- US-A- 2 536 225
- US-A- 4 926 700

## Beschreibung

### 1. Technisches Gebiet

Die vorliegende Erfindung betrifft eine Vorrichtung für die Gewindeprüfung in einer Werkzeugmaschine sowie zugehörige Verfahren.

### 2. Der Stand der Technik

Heutzutage werden hohe Anforderungen an die Wirtschaftlichkeit und Produktivität von Fertigungsanlagen gestellt. Auf der anderen Seite bestehen aber auch hohe Ansprüche an die Qualität der gefertigten Werkstücke. Diese gegenläufigen Zielrichtungen lassen sich zumeist nur durch einen hohen Automatisierungsgrad erreichen.

Die Messung von Qualitätskenngrößen wird zumeist noch mit nachgeschalteten Messeinrichtungen durchgeführt. Dabei wird das Bauteil aus der Maschine ausgeschleust und automatisch in die Messzelle eingelegt oder in Stichproben manuell der Messeinrichtung zugeführt. Teilweise sind Ansätze bekannt, Durchmesser und Geometrien mit induktiven Messtastern direkt in der Maschine zu messen. Ein anderer Ansatz ist die Messung von Prozesskenngrößen, die direkt zu dem Zerspanprozess korrelieren. In einigen Fällen ist es möglich, aus diesen indirekten Messgrößen auf die Werkstückqualität zurück zu schließen. Beispielsweise kann aus der Überwachung eines Mindestdrehmoments auf ein Vorhandensein einer Bohrung geschlossen werden. In vielen Fällen kann aber aus den Prozesssignalen keine direkte Qualitätskenngröße des Bauteils abgeleitet werden.

Grundsätzlich erfolgt die Prüfung der Qualität von Innengewinden nach DIN 13 Teil 18 folgendermaßen: Der Gewinde-Gutlehrdorn soll sich von Hand ohne Anwendung besonderer Kraft in die ganze Länge des Gewindes einschrauben lassen. Ist dies nicht möglich, dann genügt das Gewinde nicht den Anforderungen. Der Gewinde-Ausschussdorn darf sich von Hand ohne Anwendung besonderer Kraft in das Werkstückgewinde von beiden Seiten nicht mehr als zwei Umdrehungen einschrauben lassen. Lässt er sich mehr als zwei Umdrehungen einschrauben, genügt das Gewinde den Anforderungen nicht.

Eine Automatisierung dieses Verfahrens wird bereits in der Offenlegungsschrift DE 1 623 212 beschrieben. Dabei wird ein Ausschusssignal erzeugt, wenn beim maschinellen Eindrehen eines Gut-Gewindes ein Schwellwert überschritten wird oder wenn beim Eindrehen eines Ausschuss-Gewindes ein Schwellwert unterschritten wird. Diese Grenzwerte sollen den jeweiligen Erfordernissen nach bestimmt werden, wobei es allerdings offen bleibt, wie diese Bestimmung zu erfolgen hat.

Eine weitere Automatisierung der Gewindeprüfung ist durch einen Aufsatz von Kampa, Kring und Edel, "Flexibles, rechnergestütztes Messgerät zum Prüfen von Innengewinden" in "Technisches Messen" 52, S. 465 - 470, bekannt. Danach ist ein Lehrdorn so gelagert, dass er gegenüber einem Gehäuse sowohl in seiner Position als auch in seiner Winkellage begrenzt beweglich ist und sich so an die Lage und Orientierung des zu prüfenden Werkstückgewindes anpassen kann. Dadurch werden die auf den Lehrdorn senkrecht zur Gewindeachse wirkenden Kräfte gering gehalten. Der Lehrdorn wird von einem Antriebsmotor über ein Kardangetriebe angetrieben. Es werden Funktion, Position, Achslage und Tiefe des Werkstückgewindes gemessen. Zur Funktionsprüfung wird der Drehmomentverlauf während des Einschraubvorganges bestimmt.

Auch hier bleibt offen, nach welchen Kriterien eine Beurteilung, ob es sich bei einem Gewinde um ein "gutes" oder ein "schlechtes" handelt, zu erfolgen hat. Es werden lediglich Beispiele für entsprechende Drehmomentverläufe angegeben. Außerdem wird bei diesem Vorgehen, wie bereits oben angedeutet, die Prüfung des Gewindes in einer nachgeschalteten Prüfeinrichtung durchgeführt, wobei die Positionierung des Lehrdorns offensichtlich besonders schwierig ist. Derartige Prüfeinrichtungen werden meist, wie zum Beispiel in der DE 40 17 376 A1 beschrieben, mit Hilfe eines Roboters in eine Position gebracht, in der die Prüfeinrichtung durch axialen Vorschub in das zu prüfende Gewinde eingeführt wird.

Als Alternative zu diesem Vorgehen beschreibt die Patentschrift DE 906 398 eine Werkzeugmaschine für mehrere Arbeitsgänge wie etwa Bohren, Gewindeschneiden oder Gewindeprüfen. Dabei hat die Motorspindel der Werkzeugmaschine zwei Enden. An einem Ende trägt sie ein Bohrfutter und ist direkt mit dem Motor verbunden. Das andere Ende der Spindel ist über ein Getriebe und eine Kupplung mit dem Motor verbunden und kann einen Gewindeschneider oder einen Gewindeprüfer aufnehmen. Bei der Gewindebearbeitung ist es erforderlich, dass die Werkzeugspindel nach dem Bohren des Gewindelochs mit der einen Seite um 180 Grad gedreht wird, um anschließend das Gewinde mit der anderen Seite zu schneiden und zu prüfen. Insgesamt führt diese vorbekannte Anordnung zu einem erheblichen baulichen Aufwand und den damit verbundenen Kosten.

Aus dem US-Patent 2,513,460 ist eine Vorrichtung zur Gewindeprüfung mit einer Rutschkupplung bekannt.

Weiterhin beschreibt das US-Patent 2,536,225 eine Vorrichtung zur Gewindeprüfung mit einer Rutschkupplung.

Das Dokument DE 35 34 115 A1 beschreibt eine Montage- und/oder Prüfeinrichtung mit einer drehbar gelagerten Arbeitsspindel für ein Montage- oder Prüfwerkzeug. Zur Gewindemessung werden Prüfdiagramme aufgezeichnet, bei welchen das Einschraubmoment M über der Schraubtiefe T aufgetragen ist.

Schließlich beschreibt das US-Patent 4,926,700 ein Gewindeprüfgerät. Ein Bohrschrauber dreht einen Prüfdorn in ein Prüfgewinde und überwacht das Drehmoment, das auf den Bohrschrauber ausgeübt wird. Wenn das Drehmoment einen vorbestimmten Maximalwert überschreitet oder einen vorbestimmten minimalen Wert unterschreitet, dann ist dies ein Hinweis auf ein ungenügendes Gewinde

Der vorliegenden Erfindung liegt daher das Problem zugrunde, eine einfache und kostengünstig einsetzbare Vorrichtung sowie ein entsprechendes Verfahren bereitzustellen, mit denen innerhalb des Arbeitsraumes einer das Werkstück zuvor bearbeitenden Werkzeugmaschine eine Gewindeprüfung durchgeführt werden kann, wobei zuverlässigere Kriterien als im Stand der Technik für die Beurteilung der Qualität des Gewindes bereitgestellt werden.

### 3. Zusammenfassung der Erfindung

Die Erfindung ist in den unabhängigen Ansprüchen 1 und 5 definiert.

Anders als mit den oben erläuterten Systemen aus dem Stand der Technik zur Gewindeprüfung ermöglicht diese Vorrichtung das Prüfen eines Gewindes in derselben Werkzeugmaschine, in der es zuvor hergestellt wurde, indem die Vorrichtung an der Werkzeugspindel der Werkzeugmaschine angeordnet wird. Es ist also weder eine spezielle Werkzeugmaschine mit einer doppelseitigen Spindel, die zusätzlich gedreht werden muss, noch eine weitere Prüfmaschine notwendig. Auch entfällt der für eine solche Prüfmaschine im Stand der Technik beschriebene hohe Aufwand zur Positionierung des Prüfdorns über dem Gewinde.

Insbesondere die Anordnung einer Rutschkupplung in der Vorrichtung ermöglicht es, dass die Vorrichtung in dieselbe Werkzeugmaschine eingewechselt werden kann, mit der auch das Gewindeloch gebohrt werden kann. Das Bohren eines Lochs erfolgt zunächst ohne Rutschkupplung. Die für die nachfolgende Gewindeprüfung notwendige Rutschkupplung wird danach mit der Vorrichtung in die Werkzeugspindel eingewechselt. Gemäß einer weiteren Ausführungsform kann die Rutschkupplung jedoch auch außerhalb der Vorrichtung angeordnet sein.

Vorzugsweise weist der Prüfdorn die Form eines Gewindeschneiders auf und ist beschichtet, so dass er schwergängig in ein richtig geschnittenes Gewinde eingedreht werden kann.

Durch diese Gestaltung des Prüfdorns ist es nicht notwendig, die Qualität des Gewindes durch Anwendung eines Gutlehrdorns und eines Ausschussdorns nachzuweisen, wie im Stand der Technik beschrieben. Vielmehr kann die Qualität des zu prüfenden Gewindes alleine durch Merkmale des Eindrehens des Prüfdorns festgestellt werden, wie im Folgenden beschrieben.

Die Vorrichtung weist dazu ein Messsystem mit Mitteln zur Erfastung und Auswertung von Signalen aus zumindest einem Signalgeber auf, wobei sich die Signale auf das Eindrehen des Prüfdorns beziehen. Die Signale können mindestens eine der physikalischen Größen Strom, Wirkleistung, Drehmoment und / oder ein Wegsignal umfassen. Der Signalgeber kann die Werkzeugmaschine selbst sein.

Auf diese Weise werden die zur Qualitätsprüfung notwendigen Signale auf besonders einfache Weise bereitgestellt, indem auf die schon vorhandenen Signale der Werkzeugmaschine zugegriffen wird. Das Messsystem kann sich deshalb auf die Aufnahme und Auswertung der Signale beschränken.

Das Messsystem weist weiterhin Mittel zum Speichern einer Sollkurve von Signalen auf, die sich auf das Eindrehen des Prüfdorn in ein Sollgewinde beziehen. Anders als der Stand der Technik, der etwa auf die Einstellung von Schwellwerten verweist, wird mit der Sollkurve eines Sollgewindes eine komplexere Referenz bereitgestellt, die eine Vielfalt von Merkmalen aufweist, die zur Beurteilung der Qualität des zu prüfenden Gewindes herangezogen werden kann.

Weiterhin wird ein Verfahren beschrieben, bei dem ein Prüfdorns anstelle eines Werkzeugs in einer Werkzeugmaschine angeordnet wird, der Prüfdorn in ein zuvor von der Werkzeugmaschine gedrehtes Gewindes eingedreht wird, und Signale, die sich auf das Eindrehen des Prüfdorns beziehen, erfasst und ausgewertet werden.

Es wird weiterhin ein Verfahren beschrieben, bei dem Signale aus einem oder mehreren Signalgebern, die sich auf das Eindrehen des Prüfdorns beziehen, erfasst werden, eine Sollkurve von Signalen, die sich auf das Eindrehen des Prüfdorns in ein Sollgewinde beziehen, gespeichert wird, und die Sollkurve und / oder eine daraus abgeleitete Kurve oder Größe mit den Signalen und / oder einer daraus abgeleiteten Kurve oder Größe verglichen wird.

Weitere Fortentwicklungen der Erfindung finden sich in weiteren abhängigen Ansprüchen.

### 4. Kurze Beschreibung der Zeichnungen

Im Folgenden werden Aspekte der vorliegenden Erfindung unter Bezugnahme auf die begleitenden Figuren erläutert:
- Fig. 1:: Eine schematische Darstellung des Gesamtsystems eines Ausführungsbeispiels der vorliegenden Erfindung;
- Fig. 2:: eine schematische Darstellung eines Signalverlaufs bei der Gewindeprüfung; und
- Fign. 3a, 3b:: Beispiele von Signalen bei der Gewindeprüfung.

### 5. Detaillierte Beschreibung von bevorzugten Ausführungsformen

Im Folgenden werden gegenwärtig bevorzugte Ausführungsbeispiele der erfindungsgemäßen Vorrichtung und Verfahren zur Gewindeprüfung genauer erläutert. Diese werden dabei im Zusammenhang mit einer Werkzeugmaschine mit Werkzeugspindel beschrieben. Ein Einsatz in anderen Maschinen ist jedoch ebenfalls möglich.

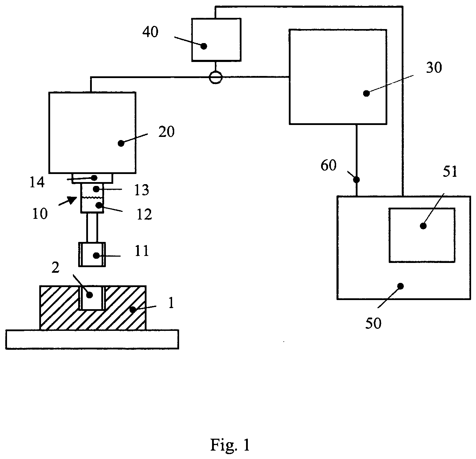

Fig. 1 zeigt eine schematische Darstellung des Gesamtsystems eines Ausführungsbeispiels der vorliegenden Erfindung. Man erkennt darin das Werkstück 1 mit dem zu prüfenden Gewinde 2 im Arbeitsraum der Werkzeugmaschine (nicht dargestellt). Der Werkzeughalter 10 mit Prüfdorn 11, Rutschkupplung 12, Längenausgleich 13 und Anschlussstück 14 ist an der Werkzeugspindel 20 der Werkzeugmaschine angeordnet.

Der Prüfdorn 11 ist so ausgelegt, dass er schwergängig in ein den Qualitätsanforderungen genügendes Gewinde eingedreht werden kann. In einer bevorzugten Ausführungsform ist der Prüfdorn 11 verschleißschützend beschichtet. Durch den Längenausgleich 13 ist gewährleistet, dass die Gewindegänge des Prüfdorns 11 in das gefertigte Gewinde 2 hineingreifen. Weiterhin trägt der Längenausgleich dazu bei, Vorschubkräfte zu minimieren. Die Anschlussvorrichtung 14 des Werkzeughalters 10 ist als eine Standard-Werkzeugschnittstelle ausgebildet, so dass der Werkzeughalter 10 vorzugsweise in jeder beliebigen Werkzeugmaschine eingesetzt werden kann.

Da der Werkzeughalter 10 selbst über eine Rutschkupplung 12 verfügt, kann er unmittelbar in einer Werkzeugmaschine eingesetzt werden, mit der das Gewindeloch gebohrt worden ist. Durch das anschließende Einsetzen des Werkzeughalters 10 kann dieselbe Werkzeugmaschine unverändert auch zum Prüfen der Qualität des gebohrten Gewindes verwendet werden. In einer weiteren Ausfihrungsform der Erfindung ist die Rutschkupplung 12 nicht in dem Werkzeughalter, sondern bereits in der Werkzeugmaschine angeordnet.

Die Werkzeugmaschine wird von der NC-Steuerung 30 gesteuert. Die Steuersignale der NC-Steuerung 30 werden über einen Bus 60 von dem Messsystem 50 erfasst und in einer Auswertungseinheit 51 ausgewertet. Zu den erfassten Signalen gehören physikalische Größen wie etwa Strom, Wirkleistung und / oder Drehmoment der Werkzeugspindel 20. Es sind aber auch andere Steuer- oder Messgrößen denkbar. Zum Beispiel können die NC-Steuerung 30 oder ein Weggeber ein Wegsignal liefern. Zusätzlich oder alternativ kann das Messsystem 50 Signale von einem Wirkleistungsmessgerät 40 oder anderen Messumformern aufnehmen. Insbesondere kann auch der Werkzeughalter 10 mit einem ähnlichen Sensorsystem ausgestattet sein, wie in der DE 10 2004 051 145 A1 beschrieben.

Die erfassten Signale können drahtgebunden, z.B. über einen Bus oder eine Analogschnittstelle, oder drahtlos an das Messsystem 50 übermittelt werden. Zusätzlich können die Signale zunächst in weiteren Geräten gewandelt, verarbeitet und / oder gespeichert werden, bevor sie von dem Messsystem 50 erfasst werden.

Nach der Herstellung des Gewindes 2 in dem Werkstück 1 wird der Werkzeughalter 10 anstelle des Gewindewerkzeugs in die Werkzeugspindel 20 der Werkzeugmaschine eingewechselt. Danach wird die Werkzeugmaschine in Gang gesetzt, um den Prüfvorgang zu starten, beispielsweise unter der Kontrolle eines NC-Programms zur Gewindebearbeitung. Die Kontrolle könnte auch von dem Messsystem 50 ausgeübt werden. Der Werkzeughalter 10 wird dabei in Rotation versetzt und so in Richtung des Werkstücks 1 gefahren, dass der Prüfdorn 11 in das Gewinde 2 eindringen kann. Wenn das Gewinde 2 zu klein ist und der Prüfdorn 11 nicht in das Gewinde 2 eindringen kann, wird das Drehmoment zu hoch und die Rutschkupplung 12 dreht durch.

Durch den Start des NC-Programms erhält das Messsystem 50 ein Startzeichen. Im Folgenden werden die Signale der NC-Steuerung und / oder anderer Geräte, wie oben beschrieben, von dem Messsystem 50 erfasst.

Vorzugsweise werden die Signale während des Eindrehens des Prüfdorns 11 in das Gewinde 2 erfasst. Zusätzliche Signale können aber auch vor oder nach dem Eindrehen des Prüfdorns 11 in das Gewinde 2 erfasst werden.

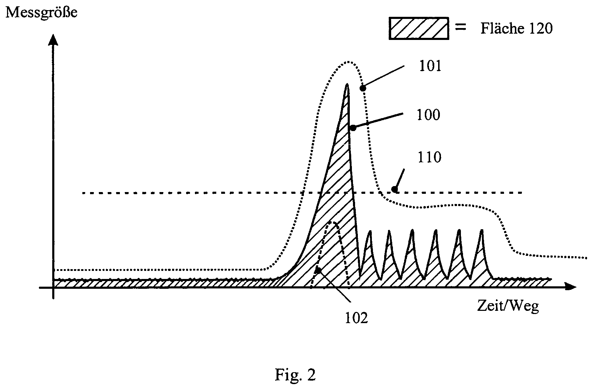

Fig. 2 zeigt eine schematische Darstellung eines Verlaufs eines Signals 100 bei der Gewindeprüfung. Dabei ist eine Messgröße, zum Beispiel Strom, Wirkleistung oder Drehmoment, über dem Weg oder der Zeit aufgetragen.

Weiterhin ist in der Auswerteeinheit 51 des Messsystems 50 zumindest eine Sollkurve von Signalen gespeichert, die sich auf das Eindrehen in ein Sollgewinde beziehen, das den Qualitätsanforderungen genügt. Wie oben beschrieben, können zum Beispiel Sollkurven für Strom, Wirkleistung oder Drehmoment gespeichert werden. Vorzugsweise werden aus den Sollkurven weitere Kurven und Größen abgeleitet, um sie mit den aktuellen Signalen des zu prüfenden Gewindes 2 zu vergleichen und daraus eine Entscheidung zu treffen, ob das Gewinde 2 den Qualitätsanforderungen genügt. Wenn das nicht der Fall ist, ist davon auszugehen, dass das geschnittene Gewinde 2 zu klein oder zu groß oder die Bearbeitung einzelner Gewindegänge fehlerhaft ist und die Tragfähigkeit damit nicht mehr gegeben ist. Es wird dann ein Alarm an die Werkzeugmaschine übermittelt, der zum Ausschleusen oder der manuellen Überprüfung des defekten Bauteils führt.

Allgemein werden zur Beurteilung der Qualität des Gewindes die Sollkurven und/oder daraus abgeleitete Kurven oder Größen mit den aktuellen Signalen und/oder daraus abgeleiteten Kurven oder Größen verglichen. Zum Beispiel kann eine Sollkurve mit einer aus den aktuellen Signalen abgeleiteten Kurve verglichen werden, oder es kann eine aus einer Sollkurve abgeleitete Größe mit den aktuellen Signalen verglichen werden. Dabei sind alle Kombinationen möglich, für die im Folgenden bevorzugte Beispiele beschrieben werden.

Zu den aus der Sollkurve des Sollgewindes abgeleiteten Kurven und Größen gehören Hüllkurven, durch deren Überwachung die Auswertungseinheit 51 ein schadhaftes Gewinde 2 erkennen kann. Bevorzugt wird dabei ein zu kleines Gewinde 2 erkannt, wenn das aktuelle Signal eine obere Hüllkurve 101 überschreitet. Ebenso wird ein zu großes Gewinde 2 erkannt, wenn das aktuelle Signal eine untere Hüllkurve 102 unterschreitet. Diese beiden Hüllkurven sind in Fig. 2 beispielhaft dargestellt.

Weiterhin kann das aktuelle Signal des zu prüfenden Gewindes 2 mit einem Grenzwert 110 verglichen werden, der ebenfalls in Fig. 2 dargestellt ist. Wenn das aktuelle Signal diesen Grenzwert nicht überschreitet, erzeugt die Auswertungseinheit 51 einen Alarm. Bevorzugt wird dabei der Grenzwert 110 aus einer Sollkurve abgeleitet werden.

Bevorzugt ist es ebenso, die Fläche 30 unter der Kurve der aktuellen Signale zu berechnen. Wenn dieser Flächenwert kleiner als ein Flächengrenzwert ist, erzeugt die Auswertungseinheit 51 einen Alarm. Als Flächengrenzwert kann dabei die Fläche unter der Sollkurve herangezogen werden.

Weiterhin ist es möglich, Merkmale wie etwa die Hüllkurven, Grenzwerte und Flächengrenzwerte bei der Beurteilung der Qualität eines Gewindes miteinander zu kombinieren.

Bevorzugt werden die Hüllkurven, Grenzwerte und Flächengrenzwerte automatisch berechnet und graphisch dargestellt. Dazu können Sollkurven eines oder mehrerer Sollgewinde herangezogen werden.

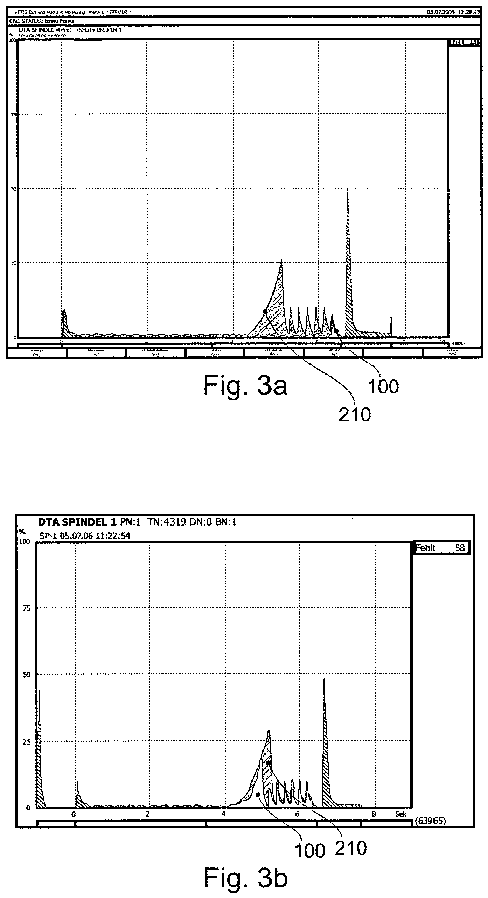

Fig. 3 zeigt Beispiele eines Vergleichs eines Signals 100 mit Sollkurven 210, in denen eine Messgröße über der Zeit aufgetragen ist. In Fig. 3a erkennt man, dass nur am Ende des Eindrehens des Prüfdorns 11 ein nennenswerter Kraftaufwand entsteht. Daraus kann geschlossen werden, dass das Prüfgewinde zu groß ist. Dagegen zeigt der Kraftaufwand des Prüfgewindes in Fig. 3b einen ähnlichen Verlauf wie der des Sollgewindes. Dies läst den Schluss zu, dass das Prüfgewinde weder zu groß noch zu klein ist.

## Patentansprüche

1. Vorrichtung zur Gewindeprüfung (10), aufweisend:
a. einen Prüfdorn (11), der in ein von einer Werkzeugmaschine geschnittenes Gewinde (2) eingedreht werden kann;
b. ein Anschlussstück (14), mit der die Vorrichtung (10) an einer Werkzeugspindel (20) der Werkzeugmaschine auswechselbar angeordnet werden kann;
c. eine Rutschkupplung (12), die zwischen dem Prüfdorn (11) und dem Anschlussstück (14) angeordnet ist; und
d. ein Messsystem (50), wobei das Messsystem Mittel zur Erfassung und Auswertung (51) von Signalen (100) aus zumindest einem Signalgeber aufweist, und wobei sich die Signale (100) auf das Eindrehen des Prüfdorns (11) in das Gewinde (2) beziehen,
e. wobei das Messsystem (50) weiterhin Mittel zum Speichern einer Sollkurve (210) von Signalen, die sich auf das Eindrehen des Prüfdorns (11) in ein Sollgewinde beziehen, aufweist, und
f. wobei das Messsystem (50) weiterhin Mittel zum Vergleichen einer aus der Sollkurve (210) abgeleiteten Hüllkurve (101,102) mit den Signalen (100) und/oder einer aus den Signalen (100) abgeleiteten Kurve aufweist,
und/oder
Mittel zum Vergleichen eines aus der Sollkurve (210) abgeleiteten Flächengrenzwerts mit einer aus den Signalen (100) abgeleiteten Größe aufweist.

2. Vorrichtung nach Anspruch 1, wobei der Prüfdorn (11) eine Form eines Gewindeschneiders aufweist und beschichtet ist, so dass er schwergängig in ein richtig geschnittenes Gewinde eingedreht werden kann.

3. Vorrichtung nach einem der Ansprüche 1 oder 2, wobei die Signale (100) zumindest eine der physikalischen Größen Strom, Wirkleistung, Drehmoment und / oder ein Wegsignal umfassen.

4. Vorrichtung nach einem der Ansprüche 1 bis 3, wobei die Mittel zur Auswertung der Signale (100) Mittel (51) zur Auswertung der Signale (100) über der Zeit umfassen.

5. Verfahren zur Gewindeprüfung mit den folgenden Schritten:
Erfassen von Signalen (100) aus einem oder mehreren Signalgebern, wobei sich die Signale auf ein Eindrehen eines Prüfdorns (11) in ein Gewinde (2) beziehen;
Speichern einer Sollkurve (210) von Signalen, die sich auf ein Eindrehen des Prüfdorns (11) in ein Sollgewinde beziehen;
Vergleichen einer aus der Sollkurve (210) abgeleiteten Hüllkurve (101,102) mit den Signalen und/oder einer aus den Signalen (100) abgeleitete Kurve,
und/oder
Vergleichen eines aus der Sollkurve abgeleiteten Flächengrenzwerts mit einer aus den Signalen (100) abgeleiteten Größe.

6. Verfahren nach Anspruch 5, wobei die Signale (100) zumindest eine der physikalischen Größen Strom, Wirkleistung, Drehmoment und / oder ein Wegsignal umfassen.

7. Verfahren nach Anspruch 5 oder 6, wobei die Signale (100) über der Zeit ausgewertet werden.

8. Verfahren nach einem der Ansprüche 5 bis 7, weiterhin aufweisend:
a. Anordnen eines Prüfdorns (11) anstelle eines Werkzeugs an einer Werkzeugspindel (20) einer Werkzeugmaschine; und
b. Eindrehen des Prüfdorns (11) in das zuvor von der Werkzeugmaschine gedrehte Gewinde (2).

## Claims

1. An apparatus for testing threads (10), comprising:
a. a thread plug gauge (11) which can be screwed into a thread (2) tapped by a machine tool;
b. a connecting member (14) which can be used to exchangeably arrange the apparatus (10) at a tool spindle (20) of the machine tool;
c. a sliding clutch (12) which is arranged between the thread plug gauge (11) and the connecting member (14); and
d. a measuring system (50), wherein the measuring system comprises means (51) for recording and analysing signals (100) from at least one signal generator, and wherein the signals (100) relate to screwing in the thread plug gauge (11) into the thread (2),
e. wherein the measuring system (50) further comprises means for storing a nominal curve (210) of signals, which relates to screwing in the thread plug gauge (11) into a nominal thread, and
f. wherein the measuring system (50) further comprises means for comparing an envelope (101,102) which is derived from the nominal curve (210) with signals (100) and / or with a curve derived from the signals (100),
and / or
means for comparing an area threshold derived from the nominal curve (210) with a magnitude derived from the signals (100).

2. The apparatus according to claim 1, wherein the thread plug gauge (11) has a shape of a thread cutter and is coated such that it can be tightly screwed into a properly tapped thread.

3. The apparatus according claim 1 or 2, wherein the signals (100) comprise at least one of the physical magnitudes current, effective power, torque and / or a path signal.

4. The apparatus according to one of the claims 1 to 3, wherein the means for evaluating the signals (100) comprise means (51) for evaluating the signals (100) as a function of time.

5. A method for testing threads, comprising the following steps:
recording signals (100) from one or more signal generators, wherein the signals refer to screwing-in a thread plug gauge (11) into a thread (2);
storing a nominal curve (210) of signals, which relates to screwing-in the thread plug (11) into a nominal thread;
comparing an envelope (101, 02) which is derived from the nominal curve (210) with signals (100) and / or with a curve derived from the signals (100),
and / or
comparing an area threshold derived from the nominal curve (210) with a magnitude derived from the signals (100).

6. The method according to claim 5, wherein the signals (100) comprise at least one of the physical magnitudes current, effective power, torque and / or a path signal.

7. The method according to claim 5 or 6, wherein the signals (100) are analysed evaluated as a function of time.

8. The method according to any one of the claims 5 to 7, further comprising:
a. arranging a thread plug gauge (11) in exchange for a tool at a tool spindle (20) of a machine tool; and
b. screwing-in the thread plug gauge (11) into a thread (2) previously tapped by the machine tool.

## Revendications

1. Dispositif de contrôle de filetage (10), comportant :
a. un tampon de contrôle (11) qui peut être vissé dans un filetage (2) taillé par une machine-outil ;
b. une pièce de raccordement (14) avec laquelle le dispositif (10) peut être disposé de manière échangeable sur une broche porte-outil (20) de la machine-outil ;
c. un accouplement à friction (12) qui est disposé entre le tampon de contrôle (11) et la pièce de raccordement (14) ; et
d. un système de mesure (50), lequel système de mesure comporte des moyens pour détecter et évaluer (51) des signaux (100) d'au moins un transmetteur de signaux, les signaux (100) se rapportant au vissage du tampon de contrôle (11) dans le filetage (2),
e. le système de mesure (50) comportant en outre des moyens pour enregistrer une courbe de consigne (210) de signaux qui se rapportent au vissage du tampon de contrôle (11) dans un filetage de consigne ; et
f. le système de mesure (50) comportant en outre des moyens pour comparer une courbe enveloppe (101, 102) dérivée de la courbe de consigne (210) avec les signaux (100) et/ou une courbe dérivée des signaux (100),
et/ou
comportant des moyens pour comparer une valeur limite de surface dérivée de la courbe de consigne (210) avec une grandeur dérivée des signaux (100).

2. Dispositif selon la revendication 1, dans lequel le tampon de contrôle (11) présente une forme d'un taraud et est revêtu de façon à pouvoir être vissé difficilement dans un filetage correctement taillé.

3. Dispositif selon l'une des revendications 1 ou 2, dans lequel les signaux (100) comprennent au moins une des grandeurs physiques suivantes :
courant, puissance active, couple et/ou un signal de déplacement.

4. Dispositif selon l'une des revendications 1 à 3, dans lequel les moyens d'évaluation des signaux (100) comprennent des moyens (51) d'évaluation des signaux (100) en fonction du temps.

5. Procédé de contrôle de filetage comprenant les étapes suivantes :
détection de signaux (100) d'un ou plusieurs transmetteurs de signaux,
lesquels signaux se rapportent à un vissage d'un tampon de contrôle (11) dans un filetage (2) ;
enregistrement d'une courbe de consigne (210) de signaux qui se rapportent à un vissage du tampon de contrôle (11) dans un filetage de consigne ;
comparaison d'une courbe enveloppe (101, 102) dérivée de la courbe de consigne (210) avec les signaux et/ou une courbe dérivée des signaux (100),
et/ou
comparaison d'une valeur limite de surface dérivée de la courbe de consigne avec une grandeur dérivée des signaux (100).

6. Procédé selon la revendication 5, selon lequel les signaux (100) comprennent au moins une des grandeurs physiques suivantes : courant, puissance active, couple et/ou un signal de déplacement.

7. Procédé selon la revendication 5 ou la revendication 6, selon lesquels les signaux (100) sont évalués en fonction du temps.

8. Procédé selon l'une des revendications 5 à 7, comportant en outre les étapes suivantes :
a. disposition d'un tampon de contrôle (11) à la place d'un outil sur une broche porte-outil (20) d'une machine-outil ; et
b. vissage du tampon de contrôle (11) dans le filetage (2) préalablement taillé par la machine-outil.
